(19) Europäisches Patentamt
European Patent Office
Office européen des brevets

(11) **EP 4 256 294 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **21816348.3**

(22) Anmeldetag: **17.11.2021**

(51) Internationale Patentklassifikation (IPC):
**G01K 3/00** *(2006.01)* **G01K 7/16** *(2006.01)*

(52) Gemeinsame Patentklassifikation (CPC):
**G01K 3/005; G01K 7/16**

(86) Internationale Anmeldenummer:
**PCT/EP2021/081931**

(87) Internationale Veröffentlichungsnummer:
**WO 2022/117338 (09.06.2022 Gazette 2022/23)**

(54) **VERFAHREN ZUR ERMITTLUNG EINER KABEL- UND/ODER STECKERTEMPERATUR AN EINEM ELEKTRISCHEN ANTRIEB**

METHOD FOR ASCERTAINING A CABLE TEMPERATURE AND/OR CONNECTOR TEMPERATURE ON AN ELECTRIC DRIVE

PROCÉDÉ DE DÉTERMINATION DE LA TEMPÉRATURE D'UN CÂBLE ET/OU D'UNE TEMPÉRATURE DE CONNECTEUR SUR UNE PROPULSION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2020 DE 102020215326**

(43) Veröffentlichungstag der Anmeldung:
**11.10.2023 Patentblatt 2023/41**

(73) Patentinhaber: **Robert Bosch GmbH**
**70442 Stuttgart (DE)**

(72) Erfinder:
• **FEUERSTACK, Peter**
**71642 Ludwigsburg (DE)**
• **RIES-MUELLER, Klaus**
**74906 Bad Rappenau (DE)**

(56) Entgegenhaltungen:
DE-A1- 102011 003 699    US-A1- 2018 090 962
US-A1- 2019 360 873

**Beschreibung**

Technisches Gebiet

Die Erfindung bezieht sich auf ein Verfahren zur Ermittlung einer Kabel- und/oder Steckertemperatur an einem elektrischen Antrieb mit einem E-Achsen-Modul, mit elektrischer Maschine, einer Leistungselektronik und einer Gleichspannungsquelle, insbesondere eine Hochvolt-Batterie, die über Anschlusskabel miteinander verbunden sind. Darüber hinaus bezieht sich die Erfindung auf die Verwendung des Verfahrens zur Ermittlung der Temperatur eines Anschlusskabels, von Anschlusspolen einer Gleichspannungsquelle oder mindestens eines Eingangs einer Leistungselektronik eines E-Achsen-Moduls eines elektrisch angetriebenen Fahrzeugs.

Stand der Technik

Zukünftig steht zu erwarten, dass vermehrt Fahrzeuge mit elektrischen Antrieben, seien es Elektrofahrzeuge, seien es Hybridfahrzeuge, im Straßenverkehr zum Einsatz kommen werden. Eine wesentliche Komponente von elektrischen Antrieben stellt die Leistungselektronik dar, die die gleiche Spannung der Batterie in eine Wechselspannung für die elektrische Maschine umwandelt. Zukünftig wird die Leistungselektronik direkt an beziehungsweise auf der elektrischen Maschine angebracht, da hierdurch u. a. die Kabel und Stecker sowie weitere Verbindungskleinteile eingespart werden können. Vorzugsweise werden die elektrische Maschine, ein Getriebe sowie die Leistungselektronik zu einer elektrischen Antriebsachse, die auch als E-Achsen-Modul bezeichnet wird, kombiniert. Das E-Achsen-Modul ist dann elektrisch nur noch an die Batterie, in der Regel eine als Hochvolt-Batterie ausgebildete Gleichspannungsquelle, anzuschließen.

Die Stromführung von der Gleichspannungsquelle, d. h. der Hochvolt-Batterie, zur Leistungselektronik und einem in dieser enthaltenen Inverter zur Wandlung der Gleichspannung in eine Wechselspannung erfolgt typischerweise über ein einen relativ großen Leitungsquerschnitt aufweisendes Anschlusskabel, in der Regel aus Kupfer oder einer Kupferlegierung gefertigt. Diese werden mit Stecker-oder Schraubanschlüssen an den Inverter angeschlossen.

Bei hohen Strömen erwärmen sich die Anschlusskabel sowie die Anschlüsse am Inverter der Leistungselektronik. Zum Schutz von temperaturempfindlichen Komponenten innerhalb des Inverters, als Beispiel seien Kondensatoren genannt, wird bisher der Inverter-Eingang beziehungsweise ein Inverter-Bus aufwändig gekühlt. Ebenso besteht die Möglichkeit, zur Absenkung der Temperaturbelastung den Kupferquerschnitt der Anschlusskabel zu erhöhen, um auf diese Weise den elektrischen Widerstand und damit die sich einstellende Erwärmung zu reduzieren. Dieser Lösungsansatz ist jedoch mit relativ hohen Kosten sowie mit einem zusätzlich entstehenden Platzbedarf behaftet.

Unter Umständen ist eine Reduktion der angeforderten Leistung vor dem Überschreiten von Temperaturschwellen erforderlich, was auch als "Derating", eine erzwungene Reduktion der Antriebsleistung, bezeichnet wird. Besagte Temperaturschwellen werden in der Applikationsphase an einigen mit Temperatursensoren ausgerüsteten Fahrzeugen bei den entsprechenden elektrischen Belastungen, die u. a. abhängig von in den Phasen auftretenden Strömen sind, ermittelt. In der Regel werden diese kritischen Stromschwellwerte in Serienfahrzeugen im Batteriesteuergerät dauerhaft gespeichert. Dokumente US2019/360873A1 und DE102011003699A1 beschreiben ein Verfahren zur Ermittlung einer Kabeltemperatur an einem elektrischen Fahrzeug beziehungsweise ein Verfahren zum Bestimmen einer Stromstärke einer Fahrzeugbatterie.

Darstellung der Erfindung

Erfindungsgemäß wird ein Verfahren vorgeschlagen zur Ermittlung einer Kabel-und/oder Steckertemperatur an einem elektrischen Antrieb, mit einem E-Achsen-Modul mit elektrischer Maschine und einer Leistungselektronik sowie einer Gleichspannungsquelle, insbesondere einer Hochvolt-Batterie, die über Anschlusskabel miteinander verbunden sind, weil zumindest die nachfolgend aufgeführten Verfahrensschritte durchlaufen werden:

a) Messung einer Spannung U_Batt an einer Gleichspannungsquelle und Messung einer Spannung U_INV an einem Eingang der Leistungselektronik,

b) Abgleich einer Messgenauigkeit durch Bezug von U_INV auf U_Batt,

c) Bestimmung eines Referenz-Summen-Widerstands R_sum_ref des Anschlusskabels bei einer bekannten Temperatur $T_{ref}$,

d) Bei Stromfluss zwischen der Gleichspannungsquelle und der Leistungselektronik erfolgt eine Messung einer Differenz U_delta zwischen den Spannungen U_Batt der Gleichspannungsquelle und U_INV an einem Eingang der Leistungselektronik und einer Bestimmung des Summen-Widerstandes R_sum.

e) Bestimmung der Temperatur aus wiederholter Bestimmung des Summen-Widerstandes während des Betriebes und Berechnung einer mittleren Temperatur des Anschlusskabels und von Verbindungselementen.

f) Unterscheidung der Widerstände $R_1$ eines Anschlusses beziehungsweise eines Verbindungselements der Gleichspannungsquelle, eines Widerstandes $R_2$ eines Anschlusskabels und eines Widerstandes $R_3$ eines Anschlusses der Leistungselektronik und

g) Reduzierung einer Antriebsleistung des elektrischen Antriebs bei Überschreitung eines Temperatur-Schwellwertes durch die Temperatur der Anschlüsse, eines Anschlusskabels und mindestens eines Eingangs der Leistungselektronik.

Durch die erfindungsgemäß vorgeschlagene Lösung kann in vorteilhafter Weise aufgrund einer wesentlich genaueren Temperaturbestimmung der bisher verwirklichte Toleranzvorhalt verringert werden, wodurch die abgegebene Antriebsleistung der Leistungselektronik, insbesondere des in dieser integrierten Inverters, vor allem im Dauerbetrieb eines E-Achsen-Moduls signifikant gesteigert werden kann.

In einer vorteilhaften Ausführungsvariante des erfindungsgemäß vorgeschlagenen Verfahrens werden die gemäß a) gemessenen Spannungswerte in mindestens einem Batteriesteuergerät und in der Leistungselektronik erfasst.

In einer weiteren Variante des erfindungsgemäß vorgeschlagenen Verfahrens wird gemäß b) eine Referenzbildung beim Start des Fahrzeugs ohne Stromfluss zur Leistungselektronik durchgeführt und zyklisch wiederholt, oder es erfolgt eine Referenzbildung aus einer Mittelwertbildung über mehrere Messungen hinweg.

Durch beide Vorgehensweisen lässt sich ein Abgleich einer Messgenauigkeit erreichen, der das "Derating" nochmals hinsichtlich seiner Zuverlässigkeit verbessert und hilfreich ist, den angesprochenen Toleranzvorhalt zu verringern.

In einer vorteilhaften Weiterbildung des erfindungsgemäß vorgeschlagenen Verfahrens wird gemäß c) eine Bestimmung des Referenz-SummenWiderstands unmittelbar nach einem Einschalten bei ausgeglichener Temperatur des Fahrzeugs durch in der Leistungselektronik vorhandene Temperatursensoren unter Berücksichtigung der Widerstandsbestimmung gemäß d) durchgeführt.

In einem vorteilhaften Verfahrensschritt des erfindungsgemäß vorgeschlagenen Verfahrens erfolgt eine Bestimmung der Referenzwerte in zyklischen Abständen bei gleicher Temperatur aller Bauteile.

Beim erfindungsgemäß vorgeschlagenen Verfahren wird bei der Bestimmung des Summen-Widerstandes R_sum nach folgender Vorgehensweise vorgegangen:

$$U\_Batt - U\_INV = U\_delta$$

mit

$$U\_delta = (R_1 + R_2 + R_3) * I\_DC = R\_sum * I\_DC$$

zu

$$R\_sum = \frac{U\_delta}{I\_DC}.$$

Beim erfindungsgemäß vorgeschlagenen Verfahren wird die Bestimmung des Widerstandes R_sum gemäß d) wiederholt während des Betriebes durchgeführt und eine Temperaturbestimmung des Anschlusskabels erfolgt jeweils mit Temperaturkoeffizienten des im Anschlusskabel verwendeten Leitungsmaterials.

Beim erfindungsgemäß vorgeschlagenen Verfahren kann in vorteilhafter Weise gemäß f) eine Unterscheidung der Widerstände $R_1$, $R_2$ und $R_3$ anhand der verschiedenen Wärmekapazitäten $C_{P,i}$ ihrer Materialien vorgenommen werden, so dass ebenfalls eine Verbesserung der erhaltenen Daten erzielt werden kann.

Beim erfindungsgemäß vorgeschlagenen Verfahren wird die Überwachung einer Temperaturänderung über die Fahrzeuglebensdauer vorgenommen, und insbesondere bei einer Detektion eines steigenden Kontaktwiderstands an einem der Anschlüsse oder an einem Eingang der Leistungselektronik wird ein Warnhinweis ausgegeben.

Das erfindungsgemäß vorgeschlagene Verfahren findet vorzugsweise Verwendung zur Ermittlung der Temperatur eines Anschlusskabels von Anschlusspolen einer Gleichspannungsquelle, insbesondere einer Hochvolt-Batterie, oder mindestens eines Eingangs einer Leistungselektronik eines E-Achsen-Moduls eines elektrisch angetriebenen Fahrzeugs.

Vorteile der Erfindung

Bei der erfindungsgemäß vorgeschlagenen Lösung kann mittels einer Spannungsmessung beziehungsweise einer Widerstandsmessung die Temperatur des Anschlusskabels zwischen Hochvolt-Batterie und Inverter der Leistungselektronik und der Inverter-Anschlüsse sehr genau ermittelt werden. Durch die erfindungsgemäß vorgeschlagene Lösung kann ein erheblich exakteres "Derating" durch Ermittlung der Kabeltemperatur oder der Temperatur der beteiligten Anschlüsse erreicht werden. Durch eine mit der erfindungsgemäß vorgeschlagenen Lösung erzielbare Verringerung des Toleranzvorhaltes kann die abgegebene Antriebsleistung eines E-Achsen-Moduls eines elektrisch angetriebenen Fahrzeugs, gesteuert durch den Inverter der Leistungselektronik, v. a. im Dauerbetrieb der elektrischen Maschine signifikant gesteigert werden.

Da durch die erfindungsgemäß vorgeschlagene Lösung eine Reduktion des Toleranzvorhaltes erreichbar ist, lassen sich aufgrund der verbesserten Daten Kosten einsparen, beispielsweise durch eine Reduktion des Kabelquerschnittes der elektrischen Verbindungskabel zwischen der Gleichspannungsquelle und dem Inverter, die bisher überdimensioniert waren, was nachteilig für Kosten und Gewicht ist. Es ist hervorzuheben, dass zur Durchführung des erfindungsgemäß vorgeschlagenen Verfahrens die bisher bestehende Sensorik beispielsweise eines Batteriemanagementsystems zur Batteriespannungsmessung eingesetzt werden kann und keine zusätzlichen Kosten verursachenden Bauteile eingesetzt werden müssen. Das erfindungsgemäß vorgeschlagene Verfahren erhöht zudem die Sicherheit, da zum Beispiel eine Erhöhung der Kontaktwiderstände der Verbindungselemente und damit eine ungewollte Temperaturerhöhung dieser Kontaktstelle rechtzeitig erkannt werden kann.

Kurze Beschreibung der Zeichnungen

Anhand der Zeichnungen wird die Erfindung nachstehend eingehender beschrieben:
Es zeigen:

Figur 1      die wesentlichen Komponenten eines elektrischen Antriebssystems,

Figur 2      die Darstellung eines E-Achsen-Moduls,

Figur 3      ein Ersatzschaltbild für die Komponenten Batterieanschluss, Anschlusskabel und Anschlussleistungselektronik bzw. Inverter,

Figur 4      ein Ersatzschaltbild hinsichtlich der thermischen Wärmekapazität von Batterieanschlussverbindungskabel und Inverter bzw. Leistungselektronikanschluss,

Figuren 5.1 und 5.2      Widerstands- bzw. Temperaturverläufe von Anschlüssen und Kabel, jeweils aufgetragen über die Zeitachse.

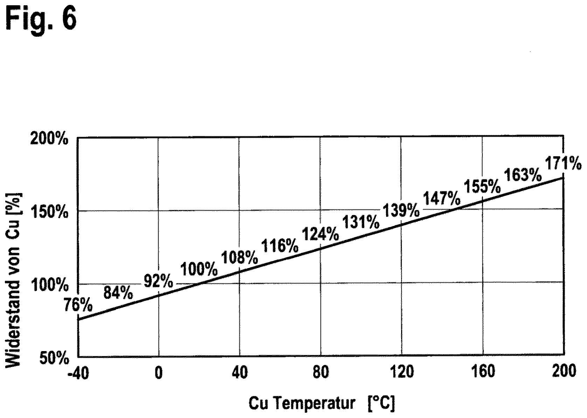

Figur 6      Diagramm des Widerstandes von Kuper (Cu) in Abhängigkeit der Kupfer-Temperatur.

Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

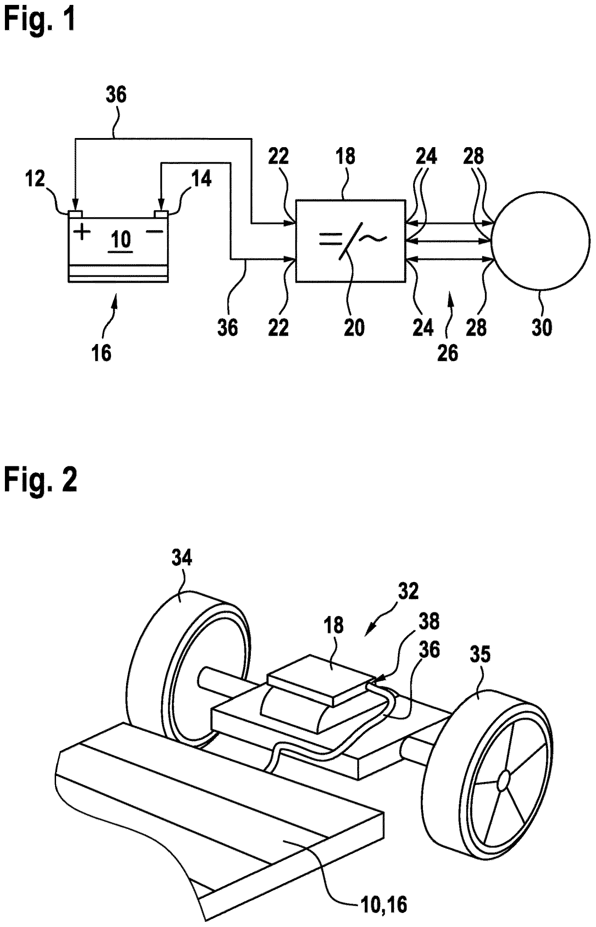

Figur 1 zeigt wesentliche Komponenten eines elektrischen Antriebs. Eine Gleichspannungsquelle 16 ist als Hochvolt-Batterie 10 ausgeführt, die einen zweiten Anschlusspol 14 aufweist. Über ein zweiadriges Anschlusskabel 36 oder zwei parallel verlaufende Anschlusskabel 36 sind der erste Anschlusspol 12 und der zweite Anschlusspol 14 der Hochvolt-Batterie 10 mit Gleichstromeingängen 22 eines Inverters 20 verbunden, der Teil einer Leistungselektronik 18 ist. Im Inverter 20 wird die Gleichspannung der Gleichspannungsquelle 16 in eine Wechselspannung umgewandelt, die an einem Wechselstrom-Ausgang 24 der Leistungselektronik 18 einem drei Phasen 28 aufweisenden Wechselstrom-System 26 zugeführt wird. Eine elektrische Maschine 30 wird durch die drei Phasen 28 des Wechselstrom-Systems 26 betrieben.

Figur 2 zeigt ein E-Achsen-Modul 32, welches eine Leistungselektronik 18 aufweist, die sich auf der Oberseite des E-Achsen-Moduls 32 befindet. Über dieses werden ein erstes angetriebenes Rad 34 sowie ein zweites angetriebenes Rad 35 angetrieben. Die als Hochvolt-Batterie 10 ausgeführte Gleichspannungsquelle 16 ist über die Anschlusskabel 36 an einem Anschluss 38 der Leistungselektronik 18 angeschlossen. Bei dem Anschluss 38 kann es sich entweder um einen Schraub-Anschluss 40 oder auch um einen Stecker-Anschluss 42 handeln.

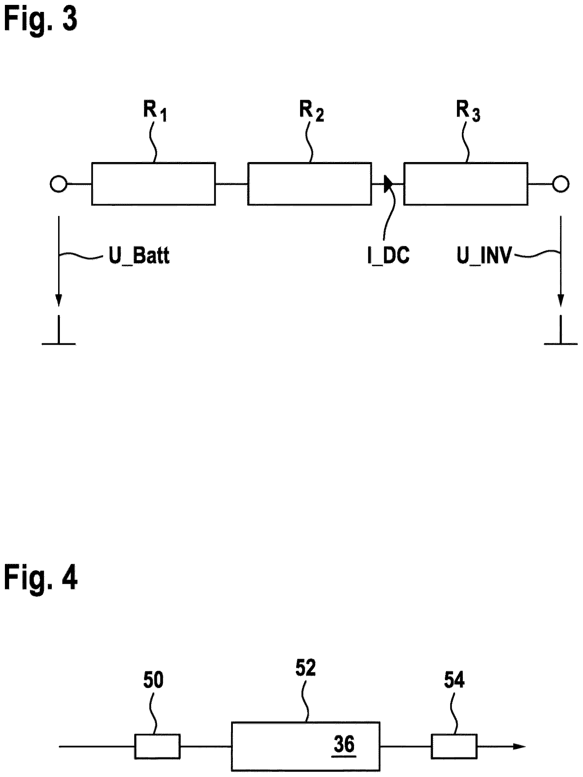

Während in der Darstellung gemäß Figur 3 ein Ersatzschaltbild des elektrischen Widerstandes R dargestellt ist, zeigt Figur 4 ein Ersatzschaltbild des Systems hinsichtlich der thermischen Wärmekapazität $c_b$.

Im elektrischen Ersatzschaltbild gemäß Figur 3 bezeichnet $R_1$ den Widerstand der Anschlüsse der Hochvolt-Batterie 10, $R_2$ den Widerstand des Anschlusskabels 36 und $R_3$ den Widerstand an den Eingängen 22 am Inverter 20, der Teil der Leistungselektronik 18 ist. Des Weiteren sind die Batteriespannung U_Batt und der im System fließende Strom I_DC sowie die am Inverter-Eingang abfallende Spannung U_INV eingezeichnet. Das Ersatzschaltbild hinsichtlich der Wärmekapazität $c_b$ gemäß Figur 4, zeigt, dass eine erste Wärmekapazität 50 der Anschlusspole 12, 14 der Hochvolt-Batterie 10 im Wesentlichen einer dritten Wärmekapazität 54 am Gleichstrom-Eingang 22 des Inverters 20 der Leistungselektronik 18 entspricht, während eine zweite, wesentlich höhere Wärmekapazität 52 durch das Anschlusskabel 36 beziehungsweise dessen leitendes Material gegeben ist. Dieser Zusammenhang lässt sich dem thermischen Ersatzschaltbild gemäß Figur 4 entnehmen.

Beim erfindungsgemäß vorgeschlagenen Verfahren erfolgt die Messung einer Spannung an der Hochvolt-Batterie 10 U_Batt und die Messung einer Spannung am Inverter-Eingang, d. h. am Eingang des Inverters 20 der Leistungselektronik U_INV, bei einem Strom I_DC = 0. Die Spannungswerte werden in mindestens einem Batteriesteuergerät und im Inverter 20 der Leistungselektronik 18 getrennt erfasst.

Ein Abgleich der Messgenauigkeit erfolgt beispielsweise dadurch, dass die Spannung U_Batt als Referenz eingesetzt wird. Die Spannung am Inverter-Eingang U_INV wird auf diesen Wert bezogen beziehungsweise korrigiert. Bei beiden Messverfahren wird die gleiche Spannung gemessen. Eine derartige Referenzbildung kann zum Beispiel beim Start des Fahrzeugs erfolgen, ohne dass ein Stromfluss zum Inverter 20 vorliegt und kann zyklisch wiederholt werden. Unter Umständen ist angeraten, eine Mittelwertbildung mehrerer Messungen vorzunehmen.

Eine Bestimmung eines Referenzleitungswiderstands U_ref erfolgt bei einer bekannten Temperatur $T_{ref}$. Diese Messung kann entweder im Herstellungsprozess erfolgen und die entsprechenden Messwerte können abgespeichert werden. Alternativ besteht die Möglichkeit, die Messung dieser Werte auch direkt nach dem ersten Einschalten der ausgeglichenen Temperatur im Fahrzeug unter Zuhilfenahme vorhandener Temperatursensoren, die beispielsweise im Inverter 20 der Leistungselektronik 18 verbaut sein können, zu speichern. In diesem Rahmen erfolgt eine Widerstandsbestimmung, wie nachfolgend noch beschrieben wird.

Optional kann die Bestimmung der oben genannten Referenzwerte auch stets neu vorgenommen werden, sofern gewährleistet ist, dass bei der Referenzbestimmung alle Bauteile die gleiche Temperatur haben, wie dies zum Beispiel nach einem längeren Fahrzeugstillstand der Fall ist.

Bei Stromfluss zwischen der Hochvolt-Batterie 10 und dem Inverter 20 der Leistungselektronik 18 erfolgt die Messung einer Differenzspannung U_delta zwischen der Spannung an der Batterie U_Batt und der Spannung am Inverter 20 der Leistungselektronik 18 und eine Bestimmung des Summen-Widerstandes gemäß der nachfolgenden Beziehung:

$$U\_Batt - U\_INV = U\_delta.$$

$$U\_delta = (R_1 + R_2 + R_3) * I\_DC = R\_sum * I\_DC.$$

Da die Differenz nach Spannungsdifferenz U_delta und I_DC bekannt sind und aus einer Strommessung innerhalb der Hochvolt-Batterie 10 gewonnen werden können, kann der Summen-Widerstand R_sum berechnet werden.

Beim erfindungsgemäß vorgeschlagenen Verfahren erfolgt die Bestimmung der Temperatur des Anschlusskabels 36 derart, dass davon ausgegangen wird, dass die Temperatur des Anschlusskabels 36 proportional zum elektrischen Widerstand verläuft. Dies bedeutet, dass aus dem elektrischen Widerstand R die Temperatur ermittelt werden kann. Hierzu wird eine Widerstandsbestimmung gemäß obenstehender Beziehung für R_sum vorgenommen und wiederholt während des Betriebes ausgeführt. Die Temperatur der Verbindungsleitung, d. h. des Anschlusskabels 36, wird jeweils mittels des Temperaturkoeffizienten des Leitungsmaterials berechnet. Für das Material Kupfer (Cu) ist der Temperaturkoeffizient zum Beispiel $3,39*10^{-3}$/Kelvin, für Aluminium $4,0*10^{-3}$/ Kelvin.

Es ergibt sich folgende grobe Abschätzung:

$$R_{DC}(T) \approx R_{DC} * (1 + \frac{0,4\%}{K} * (T - T_0)) = R_{DC} + \Delta R_{DC}(T)$$

Daraus wird folgende grobe Abschätzung gewonnen:

$$\Delta R_{DC}(T) \approx R_{DC} * \frac{0,4\%}{K} * (T - T_0)$$

$T$, $T_0$: Temperatur, Referenztemperatur

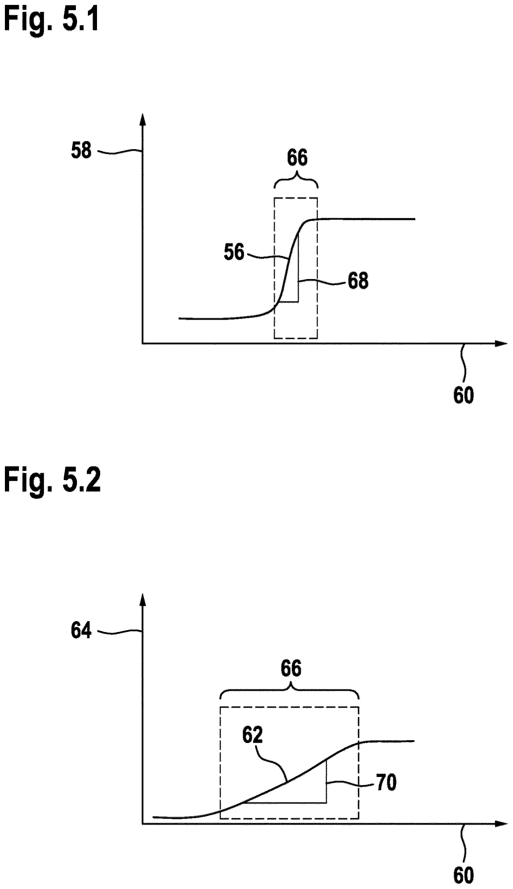

Schließlich erfolgt beim erfindungsgemäß vorgeschlagenen Verfahren eine Unterscheidung zwischen den Widerständen $R_1$ und $R_2$ aufgrund ihrer unterschiedlichen Wärmekapazitäten. Die Anschlüsse, sowohl die Anschlusspole 12, 14 der Hochvolt-Batterie 10 als auch die Anschlüsse am Gleichstrom-Eingang 22 des Inverters 20 der Leistungselektronik 18, zeigen eine wesentlich höhere Dynamik bei Widerstandsänderungen, verglichen mit der Dynamik, die im Anschlusskabel 36 auftritt. Diese Zusammenhänge sind in den Figuren 5.1 und 5.2 einander gegenübergestellt.

In der Darstellung gemäß Figur 5.1 ist ein Widerstand beziehungsweise Temperaturverlauf 56 der Anschlüsse über eine Zeitachse 60 aufgetragen. In der Darstellung gemäß Figur 5.2 ist ein Widerstandsverlauf beziehungsweise Temperaturverlauf im Anschlusskabel 36 über die Zeitachse 60 aufgetragen. Innerhalb des in beiden Figuren 5.1 und 5.2 dargestellten Übergangsbereiches 66 lassen sich Gradienten bestimmen. So ist beispielsweise ein erster Gradient 68 in Bezug auf die Widerstands- und Temperaturänderung an den Anschlüssen wesentlich steiler ausgeführt als ein zweiter Gradient 70, der einen flacheren Verlauf hat, der sich innerhalb des Anschlusskabels 36 zwischen Hochvolt-Batterie 10 und einem Gleichstrom-Eingang 22 des Inverters 20 der Leistungselektronik 18 einstellt.

Beim erfindungsgemäß vorgeschlagenen Verfahren kann entsprechend der ermittelten Temperatur der Anschlüsse oder des Anschlusskabels 36 ein Schwellwert definiert werden. Übersteigt die Temperatur der Anschlüsse 12, 14 beziehungsweise des Gleichstrom-Eingangs 22 oder die Temperatur des Anschlusskabels 36 jenen Schwellwert, so wird die Antriebsleistung und damit der Strom I_DC reduziert.

In optionaler Weise kann bei einer Beobachtung der Temperaturänderung, über die Fahrzeuglebensdauer gesehen, ein sich schleichend einstellendes Auftreten von Schäden detektiert werden. Erhöht sich zum Beispiel die Temperatur der Anschlüsse 12, 14 über die Lebensdauer, so kann von einem steigenden Kontaktwiderstand ausgegangen werden und dem Fahrzeughalterbeziehungsweise dem Fahrer gegebenenfalls eine Warnung beziehungsweise ein Wartungshinweis angegeben werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Verfahren zur Ermittlung einer Kabel- und/oder Steckertemperatur an einem elektrischen Antrieb, mit einem E-Achsen-Modul (32) mit elektrischer Maschine (30) und einer Leistungselektronik (18) und einer Gleichspannungsquelle (16), insbesondere eine Hochvolt-Batterie (10), die über Anschlusskabel (36) miteinander verbunden sind, mit zumindest nachfolgenden Verfahrensschritten:

   a) Messung einer Spannung U_Batt an einer Gleichspannungsquelle (16) und einer Spannung U_INV an einem Eingang der Leistungselektronik (18),
   b) Abgleich einer Messgenauigkeit durch Bezug von U_INV auf U _ Batt,
   c) Bestimmung eines Referenz-Summen-Widerstandes R_sum_ref bei einer bekannter Temperatur $T_{ref}$,
   d) bei Stromfluss zwischen der Gleichspannungsquelle (16) und der Leistungselektronik (18) erfolgt eine Messung einer Differenz U_delta zwischen der Spannung U_Batt der Gleichspannungsquelle (16) und der Spannung U_INV an einem Eingang der Leistungselektronik (18) und eine Bestimmung des Summen-Widerstandes R_sum,
   e) Bestimmung der Temperatur aus wiederholter Bestimmung des Summen-Widerstandes während des Betriebs und der Berechnung einer mittleren Temperatur des Anschlusskabels (36)
   f) Unterscheidung von Widerstand $R_1$ eines Anschlusses (12, 14) der Gleichspannungsquelle (16), eines Widerstands $R_2$ eines Anschlusskabels (36) und eines Widerstands $R_3$ eines Anschlusses der Leistungselektronik (18) und
   g) Reduzierung einer Antriebsleistung des elektrischen Antriebs bei Überschreitung eines Temperatur-Schwellwertes durch die Temperatur der Anschlüsse (12, 14), des Anschlusskabels (36) und/oder des Eingangs der Leistungselektronik (18).

2. Verfahren gemäß Anspruch 1, **dadurch gekennzeichnet, dass** die gemäß a) gemessenen Spannungswerte in einem Batteriesteuergerät und in der Leistungselektronik (18) erfasst werden.

3. Verfahren gemäß den Ansprüchen 1 bis 2, **dadurch gekennzeichnet, dass** gemäß b) eine Referenzbildung beim Start des Fahrzeugs ohne Stromfluss zur Leistungselektronik (18) erfolgt und zyklisch wiederholt wird
oder
eine Referenzbildung aus einer Mittelwertbildung über mehrere Messungen erfolgt.

4. Verfahren gemäß den Ansprüchen 1 bis 3, **dadurch gekennzeichnet, dass** gemäß c) eine Bestimmung des Referenz-Summen-widerstandes unmittelbar nach einem Ersteinschalten bei ausgeglichener Temperatur des Fahrzeugs durch in der Leistungselektronik (18) vorhandene Temperatursensoren unter Berücksichtigung der Widerstandsmessung gemäß d) erfolgt.

5. Verfahren gemäß den Ansprüchen 1 bis 4, **dadurch gekennzeichnet, dass** eine Bestimmung der Referenzwerte in zyklischen Abständen erfolgt, bei gleicher Temperatur aller Bauteile.

6. Verfahren gemäß den Ansprüchen 1 bis 5, **dadurch gekennzeichnet, dass** die Bestimmung eines Leitungswiderstands R_sum erfolgt gemäß:

$$U\_Batt - U\_INV = U\_delta \text{ mit}$$

$$U\_delta = (R_1 + R_2 + R_3) * I\_DC = R\_sum * I\_DC, \text{ zu}$$

$$R\_sum = \frac{U\_delta}{I\_DC}$$

7. Verfahren gemäß den Ansprüchen 1 bis 6, **dadurch gekennzeichnet, dass** die Bestimmung des Widerstandes R_sum gemäß d) wiederholt während des Betriebs durchgeführt wird und eine Temperaturberechnung des Anschlusskabels (36) jeweils mit dem Temperaturkoeffizienten des Leitungsmaterials erfolgt, aus dem die Leiter des Anschlusskabels (36) gefertigt sind.

8. Verfahren gemäß den Ansprüchen 1 bis 7, **dadurch gekennzeichnet, dass** gemäß f) eine Unterscheidung der Widerstände $R_1$, $R_2$ und $R_3$ anhand der verschiedenen Wärmekapazitäten $c_P$ ihrer Materialien vorgenommen wird.

9. Verfahren gemäß den Ansprüchen 1 bis 8, **dadurch gekennzeichnet, dass** eine Überwachung einer Temperaturänderung über die Fahrzeuglebensdauer durchgeführt wird und insbesondere bei einer Detektion eines steigenden Kontaktwiderstands an einem der Anschlüsse (12, 14) oder an einem Eingang der Leistungselektronik (18) ein Warnhinweis ausgegeben wird.

10. Verwendung des Verfahrens gemäß einem der Ansprüche 1 bis 9 zur Ermittlung der Temperatur eines Anschlusskabels (36), von Anschlusspolen (12, 14) einer Gleichspannungsquelle (16) und/oder mindestens eines Eingangs einer Leistungselektronik (18) eines E-Achsen-Moduls (32) eines elektrisch angetriebenen Fahrzeugs.

**Claims**

1. Method for ascertaining a cable and/or connector temperature on an electric drive, having an E-axis module (32) having an electric machine (30) and a power electronics system (18) and a DC voltage source (16), in particular a high-voltage battery (10), which are connected to one another via connection cables (36), the method comprising at least the following method steps:

    a) measuring a voltage U_Batt at a DC voltage source (16) and a voltage U_INV at an input of the power electronics system (18),
    b) comparing a measurement accuracy by referencing U_INV to U_Batt,
    c) determining a reference sum resistance R_sum_ref at a known temperature $T_{ref}$,
    d) with current flowing between the DC voltage source (16) and the power electronics system (18), measuring a difference U_delta between the voltage U_Batt of the DC voltage source (16) and the voltage U_INV at an input of the power electronics system (18) and determining the sum resistance R_sum,
    e) determining the temperature from repeated determination of the sum resistance during operation and calculating an average temperature of the connection cable (36),

f) differentiating between the resistance $R_1$ of a connection (12, 14) of the DC voltage source (16), a resistance $R_2$ of a connection cable (36), and a resistance $R_3$ of a connection of the power electronics system (18), and

g) reducing a drive power of the electric drive when the temperature of the connections (12, 14), the connection cable (36) and/or the input of the power electronics system (18) exceeds a temperature threshold value.

2. Method according to Claim 1, **characterized in that** the voltage values measured according to a) are recorded in a battery control device and in the power electronics system (18).

3. Method according to Claims 1 to 2, **characterized in that**, according to b), a reference is formed when the vehicle is started and when there is no current flow to the power electronics system (18) and this reference formation is repeated cyclically

or

a reference is formed from an average value formation over several measurements.

4. Method according to Claims 1 to 3, **characterized in that**, according to c), the reference sum resistance is determined immediately after an initial start-up at a stable vehicle temperature by way of temperature sensors present in the power electronics system (18), taking into account the resistance measurement according to d).

5. Method according to Claims 1 to 4, **characterized in that** the reference values are determined at cyclical intervals, at the same temperature for all components.

6. Method according to Claims 1 to 5, **characterized in that** a line resistance R_sum is determined according to:

$$U\_Batt - U\_INV = U\_delta$$

where

$$U\_delta = (R_1 + R_2 + R_3) * I\_DC = R\_sum * I\_DC,$$

for

$$R\_sum = \frac{U\_delta}{I\_DC}$$

7. Method according to Claims 1 to 6, **characterized in that** the resistance R_sum is determined according to d) repeatedly during operation and the temperature of the connection cable (36) is calculated in each case using the temperature coefficient of the line material of which the conductors of the connection cable (36) are made.

8. Method according to Claims 1 to 7, **characterized in that**, according to f), the resistances $R_1$, $R_2$ and $R_3$ are differentiated based on the different thermal capacities $c_P$ of the materials thereof.

9. Method according to Claims 1 to 8, **characterized in that** a change in temperature is monitored over the vehicle lifetime and a warning is output, in particular when an increasing contact resistance is detected at one of the connections (12, 14) or at an input of the power electronics system (18).

10. Use of the method according to one of Claims 1 to 9 for determining the temperature of a connection cable (36), connection poles (12, 14) of a DC voltage source (16) and/or at least one input of a power electronics system (18) of an E-axis module (32) of an electrically driven vehicle.

**Revendications**

1. Procédé de détermination d'une température de câble et/ou de fiche au niveau d'un mécanisme d'entraînement électrique, comprenant un module d'essieu électrique (32) avec une machine électrique (30) et une électronique de puissance (18) et une source de tension continue (16), notamment une batterie à haute tension (10), qui sont reliées entre elles par le biais de câbles de raccordement (36), comprenant au moins les étapes de procédé suivantes :

a) mesure d'une tension U_Batt au niveau d'une source de tension continue (16) et d'une tension U_INV à une entrée de l'électronique de puissance (18),

b) ajustement d'une précision de mesure par référence de U_INV à U_Batt,

c) détermination d'une résistance cumulée de référence R_sum_ref à une température connue $T_{ref}$,

d) en présence d'un flux de courant entre la source de tension continue (16) et l'électronique de puissance (18), une mesure d'une différence U_delta, entre la tension U_Batt de la source de tension continue (16) et la tension U_INV à une entrée de l'électronique de puissance (18), et une détermination de la résistance cumulée R_sum sont effectuées,

e) détermination de la température à partir de la détermination répétée de la résistance cumulée pendant le fonctionnement et du calcul d'une température moyenne du câble de raccordement (36),

f) distinction entre la résistance $R_1$ d'une borne (12, 14) de la source de tension continue (16), une résistance $R_2$ d'un câble de raccordement (36) et une résistance $R_3$ d'une borne de l'électronique de puissance (18) et

g) réduction d'une puissance d'entraînement du mécanisme d'entraînement électrique en cas de dépassement d'une valeur de seuil de température par la température des bornes (12, 14), du câble de connexion (36) et/ou de l'entrée de l'électronique de puissance (18).

**2.** Procédé selon la revendication 1, **caractérisé en ce que** les valeurs de tension mesurées selon a) sont collectées dans un contrôleur de batterie et dans l'électronique de puissance (18).

**3.** Procédé selon les revendications 1 à 2, **caractérisé en ce que** selon b), un calcul de référence est effectué au démarrage du véhicule sans flux de courant vers l'électronique de puissance (18) et répété de manière cyclique ou
un calcul de référence est effectué à partir d'un calcul de moyenne sur plusieurs mesures.

**4.** Procédé selon les revendications 1 à 3, **caractérisé en ce que** selon c), une détermination de la résistance cumulée de référence est effectuée immédiatement après une première mise en marche à une température équilibrée du véhicule par des capteurs de température présents dans l'électronique de puissance (18) en tenant compte de la mesure de résistance selon d).

**5.** Procédé selon les revendications 1 à 4, **caractérisé en ce qu'**une détermination des valeurs de référence est effectuée à des intervalles cycliques, à la même température de tous les composants.

**6.** Procédé selon les revendications 1 à 5, **caractérisé en ce que** la détermination d'une résistance de ligne R_sum est effectuée selon :

$$U\_Batt - U\_INV = U\_delta$$

avec

$$U\_delta = (R_1 + R_2 + R_3) * I\_DC = R\_sum * I\_DC,$$

pour

$$R\_sum = \frac{U\_delta}{I\_DC}$$

**7.** Procédé selon les revendications 1 à 6, **caractérisé en ce que** la détermination de la résistance R_sum selon d) est effectuée de manière répétée pendant le fonctionnement et un calcul de température du câble de raccordement (36) est effectué à chaque fois avec le coefficient de température du matériau conducteur à partir duquel sont fabriqués les conducteurs du câble de raccordement (36).

**8.** Procédé selon les revendications 1 à 7, **caractérisé en ce que** selon f), une distinction des résistances $R_1$, $R_2$ et $R_3$ est réalisée à l'aide des différentes capacités thermiques $c_p$ de leurs matériaux.

**9.** Procédé selon les revendications 1 à 8, **caractérisé en ce qu'**une surveillance d'une modification de la température est effectuée sur la durée de vie du véhicule et un avertissement est notamment délivré dans le cas d'une détection d'une résistance de contact croissante au niveau de l'une des bornes (12, 14) ou au niveau d'une entrée de l'électronique de puissance (18).

**10.** Utilisation du procédé selon l'une des revendications 1 à 9 pour déterminer la température d'un câble de raccordement (36), de pôles de raccordement (12, 14) d'une source de tension continue (16) et/ou d'au moins une entrée d'une électronique de puissance (18) d'un module d'essieu électrique (32) d'un véhicule à propulsion électrique.

## Fig. 1

## Fig. 2

# Fig. 3

$R_1$      $R_2$      $R_3$

U_Batt      I_DC      U_INV

# Fig. 4

50      52      54

36

# Fig. 5.1

58

66

56

68

60

# Fig. 5.2

64

66

62

70

60

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019360873 A1

- DE 102011003699 A1